(19) Europäisches Patentamt
European Patent Office
Office européen des brevets

(11) Publication number: 0 109 123
B1

(12) **EUROPEAN PATENT SPECIFICATION**

(45) Date of publication of patent specification: **25.03.87**

(51) Int. Cl.$^4$: **C 08 L 67/00** // (C08L67/00, C08K5:00, 5:09)

(21) Application number: **83201584.6**

(22) Date of filing: **04.11.83**

(54) **Thermoplastic block copolyester resin composition containing a nucleating agent and an accelerator.**

(30) Priority: **11.11.82 NL 8204363**

(43) Date of publication of application:
**23.05.84 Bulletin 84/21**

(45) Publication of the grant of the patent:
**25.03.87 Bulletin 87/13**

(84) Designated Contracting States:
**BE DE FR GB IT NL**

(56) References cited:
**EP-A-0 021 648**
**EP-A-0 029 285**
**EP-A-0 041 315**
**FR-A-2 502 162**
**GB-A-1 247 759**
**NL-A-7 901 605**
**US-A-4 351 757**

(73) Proprietor: **AKZO N.V.**
**Velperweg 76**
**NL-6824 BM Arnhem (NL)**

(72) Inventor: **Zeilstra, Jacobus Johannes**
**Doetinchemseweg 4**
**NL-7048 AA Wijnbergen (NL)**
Inventor: **Brink, Ted**
**Teisterbantstraat 62**
**NL-6825 CL Arnhem (NL)**

(74) Representative: **Sieders, René et al**
**P.O. Box 314**
**NL-6800 AH Arnhem (NL)**

EP 0 109 123 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a thermoplastic block copolyester resin composition comprising (A) a block copolyester which substantially consists of repeating intralinear long-chain ester units and short-chain ester units joined through ester linkages, which long-chain ester units correspond to the formula

$$-OGO-\overset{O}{\overset{\|}{C}}-R-\overset{O}{\overset{\|}{C}}- \qquad (I)$$

and which short-chain ester units correspond to the formula

$$-ODO-\overset{O}{\overset{\|}{C}}-R-\overset{O}{\overset{\|}{C}}- \qquad (II)$$

where G is a divalent radical remaining after the removal of terminal hydroxy groups from at least one long-chain glycol having a melting point not higher than 55°C and a number average molecular weight of from 400—4000, R is a divalent radical remaining after removal of carboxyl groups from at least one dicarboxylic acid having a molecular weight of less than 300, and D is a divalent radical remaining after removal of hydroxyl groups from at least one aliphatic diol having a molecular weight of less than 250, with the proviso that the short-chain ester units contain at least 85 mole per cent of ethylene terephthalate units, said short-chain ester units being present in an amount of 25—85% by weight, based on the copolyester; and (B) a nucleating agent in an amount of 0,01 to 10% by weight, based on the copolyester.

Thermoplastic block copolyester resin compositions of the type indicated above are known from, int. al., German Patent Specification 23 52 584 and European Patent Application 51 220.

These publications disclose the addition of nucleating agents to copolyesters of the above-mentioned composition for the purpose of improving their injection moulding properties.

Although the use of the nucleating agents described therein, results in quite a considerable increase in curing rate, the minimum injection moulding temperature which permits injection moulding within a cycle time which is still acceptable from industrial use has been found to be prohibitively high for many plastics processing plants. In actual practice there is therefore a great need for copolyester resin compositions of the type indicated above which still can be injection moulded into objects having a crystalline surface at a lower mould temperature (≤90°C). The present invention provides a thermoplastic block copolyester resin composition exhibiting these last-mentioned properties.

The invention consists in that in a block copolymer resin composition of the known type mentioned in the opening paragraph there is also incorporated an accelerator (C) in an amount such that the heat of cold crystallization $\Delta H_H$ per g resin is at least 15% smaller than that of a blend of the components (A) and (B).

By accelerators are to be understood here the compounds defined in claim 1 that promote the mobility of the polymer in its supercooled state.

For the determination of the $\Delta H_H$ the copolyester resin compositions are first injection moulded into UL-bars having a thickness of 1,6 mm (cylinder temperature between $T_m$ and $T_{m+30°C}$; mould temperature 50°C with a residence time in the mould of 30 seconds in a total cycle time of not more than 35 seconds), cooled in liquid nitrogen immediately after being released from the mould and subjected to programmed heating up to 110°C.

During heating a temperature curve is registered with the aid of a DSC apparatus (Differential Scanning Calorimeter) connected to a differentialvanalyser (DTA). The surface area of the resulting crystallization exotherm is a measure of the $\Delta H_H.T_m$ in the temperature at which the peak in the melt curve is reached.

Resin compositions displaying a satisfactory hardening rate are generally obtained using an amount of accelerator such that the $\Delta H_H$ is at least 30% smaller than that of a mixture of the components (A) and (B).

Preference, however, is given to resin compositions with an amount of accelerating agent such that the $\Delta H_H$ is at least 50% smaller than that of a mixture of the components (A) and (B).

It should be added that the addition of an accelerator to a block copolyester of the type indicated above in which a nucleating agent is incorporated is known in itself from European Patent Applications 21 648 and 29 285. In that case the copolyester contain a maximum amount of 10% by weight of a polyether, the polyether segment exclusively serving as a chemically bound accelerator.

Although the presence of a non-chemically bound accelerator is not excluded, it does not appear from said applications that the addition envisaged offers any essential advantages.

The total amount of accelerator which according to the state of the art may advantageously by added to a polyalkylene terephthalate is generally in the range of 0,1 to 15% by weight, preference being given to an amount in the range of 1 to 6% by weight. In German Patent Specification 29 07 729, for instance, a maximum amount of about 12% by weight is mentioned, whereas US Patent Specification 4 327 007 mentions a maximum amount of 15% by weight, preference being given to an amount in the range of 1 to 6% by weight. French Patent Specification 2 502 162 also mentions a maximum amount of 15% by weight, preference being given to an amount in the range of 2 to 10% by weight. The high proportion of chemically

bound accelerator already contained in the block copolyesters described in the afore-mentioned German Patent Specification 23 52 584 and the afore-mentioned European Patent Application 51 220 implies that the advantages that might be derived from using an additional amount of a non chemically bound accelerator were never considered.

The block copolyesters on which the present invention is based are described in US Patent Specification 3 023 192 and British Patent Specification 682 866.

The thermoplastic block copolyester resins substantially consist of repeating long-chain ester units and short-chain ester units. The term "long-chain ester units" as used herein refers to the product of a reaction of a long-chain glycol and a dicarboxylic acid.

Long-chain glycols that can be used for preparing polymers of this invention include the poly(alkylene oxide)glycols where the alkylene is $C_2$—$C_8$, such as poly(ethylene oxide)glycol, poly(1,2- and 1,3-propylene oxide)glycol, poly(tetramethylene oxide)glycol, poly(pentamethylene oxide)glycol, poly(octamethylene oxide)glycol and poly(1,2-butylene oxide)glycol; random or block copolymers of ethylene oxide and 1,2-propylene oxide; and polyformals prepared by reacting formaldehyde with glycols, such as pentamethylene glycol, or mixtures of glycols, such as a mixture of tetramethylene and pentamethylene glycols. Other satisfactory long-chain polymeric glycols include polybutadiene or polyisoprene glycols, copolymers of these, and saturated hydrogenated products of these materials. Preferred long-chain glycols are poly(tetramethylene oxide)glycol having a number average molecular weight of 600—2000 and ethylene oxide capped poly(propylene oxide)glycol having a number average molecular wegiht of 1500—2800 and containing 15—25% ethylene oxide.

The short-chain ester units are the products of the reaction of a low molecular weight diol and a dicarboxylic acid.

Of the short-chain ester units either at least 85 mole % are ethylene terephthalate units, resulting from the reaction of ethylene glycol with terephthalic acid. Low molecular weight diols (other than ethylene glycol) which react to form short-chain ester units are aliphatic diols having molecular weights of less than about 250. The term aliphatic diols as used herein should be construed to include cycloaliphatic diols.

Usually diols having 3—15 carbon atoms can be used. Representative diols include propylene, pentamethylene, 2,2-dimethyltrimethylene, hexamethylene, and decamethylene glycols, dihydroxy cyclohexane, cyclohexane dimethanol, and mixtures thereof. 0,5 to 10 mole % of the ethylene glycol can be satisfactorily replaced with a codiol having 4 to 10 carbon atoms, of which the hydroxyl groups are separated by branched or non-branched alkylene groups having 3 to 4 carbon atoms, and which codiol has at least one secondary or tertiary hydroxyl group or two primary hydroxyl groups and is unsubstituted or mono- or dialkyl substituted, the sum of the number of carbon atoms of the substituents being at least 4.

Examples of such low molecular weight codiols include 2-ethyl hexane diol-1,3, 3 methyl pentane diol-1,4, 2-methyl pentane diol-2,4, 2,2,4-trimethyl pentane diol-1,3, 2,2-diethyl propane diol-1,3, butane diol-1,4, hexane diol-2,5, propane diol-1,3 and butane diol-1,3.

Dicarboxylic acids (other than terephthalic acid) which can be reacted with the foregoing long-chain glycols and short-chain diols to form the polymer of this invention are aliphatic, cycloaliphatic, or aromatic dicarboxylic acids having a molecular weight of less than 300.

The term "dicarboxylic acids" as used herein includes equivalents of dicarboxylic acids having two functional carboxyl groups which perform substantially like dicarboxylic acids in reaction with long-chain glycols or low molecular weight diols in forming copolyesters.

The equivalents include esters and ester-forming derivatives, such as acid chlorides and anhydrides.

The dicarboxylic acids can contain any substituents which do not or hardly interfere with the polymer formation and the use of the polymer of this invention.

Aliphatic dicarboxylic acids, as the term is used herein, refers to carboxylic acids having two carboxyl groups each attached to a saturated carbon atom. If the carbon atom to which the carboxyl group is attached is saturated and is in a ring, the acid is cycloaliphatic. Aliphatic or cycloaliphatic acids having conjugated unsaturation often cannot be used because of homopolymerization. However, some unsaturated acids, such as maleic acid, can be used.

Aromatic dicarboxylic acids, as the term is used herein, are dicarboxylic acids having two carboxyl groups attached to a carbon atom in an isolated or fused benzene ring. It is not necessary that both functional carboxyl groups be attached to the same aromatic ring and where more than one ring is present, they can be joined by aliphatic or aromatic divalent radicals or divalent radicals such as —O— or —$SO_2$—.

Representative aliphatic and cycloaliphatic dicarboxylic acids that can be used in this invention are sebacic acid, 1,3-cyclohexane dicarboxylic acid, 1,4-cyclohexane dicarboxylic acid, adipic acid, glutaric acid, succinic acid, carbonic acid, oxalic acid, azelaic acid, diethylmalonic acid, allyl malonic acid, 4-cyclohexane 1,2-dicarboxylic acid, α-ethylsuberic acid, α,α',β,β'-tetramethylsuccinic acid, cyclopentane-dicarboxylic acid, decahydro-1,5-naphthalene dicarboxylic acid, 4,4'-bicyclohexyl dicarboxylic acid, decahydro-2,6-naphthalene dicarboxylic acid, 4,4'-methylenebis(cyclohexyl carboxylic acid), 3,4-furan dicarboxylic acid, and 1,1-cyclobutane dicarboxylic acid. Preferred aliphatic acids are cycloaliphatic acids are cyclohexane-dicarboxylic acids and adipic acid.

Representative aromatic dicarboxylic acids which can be used include phthalic and isophthalic acids, dibenzoic acid, substituted dicarboxy compounds with two benzene nuclei such as bis(p-carboxyphenyl)-methane, p-oxy-(p-carboxyphenyl) benzoic acid, ethylene-bis(p-oxybenzoic acid), 1,5-naphthalene

dicarboxylic acid, 2,6-naphthalene dicarboxylic acid, 2,7-naphthalene dicarboxylic acid, phenanthrene dicarboxylic acid, anthracene dicarboxylic acid, 4,4'-sulfonyl dibenzoic acid, and $C_1$—$C_{12}$ alkyl and ring substitution derivatives thereof, such as halo, alkoxy, and aryl derivatives. Hydroxyl acids such as p(β-hydroxyethoxy) benzoic acid can also be used providing an aromatic dicarboxylic acid is also present.

As acids used in addition to terephthalic acid, aromatic dicarboxylic acids are a preferred class for preparing the copolyester polymers of this invention. Among the aromatic acids, those with 8—16 carbon atoms are preferred, particularly the phenylene dicarboxylic acids, i.e., phthalic and isophthalic acids.

It is of essential importance that at least 85 mole per cent of the short-chain ester units should be ethylene terephthalate units. Therefore at least 85 mole % of the dicarboxylic acid incorporated into the polymer should consist of terephthalic acid and at least 85 mole % of the low molecular weight glycol incorporated into the polymer should consist of ethylene glycol. This means that at least either 85% of the total R groups in formulae I and II are 1,4-phenylene radicals. Less than 85% of the R groups either in formula I or in formula II may therefore be 1,4-phenylene, provided that at least 85% of the total R groups in the two formulae are 1,4-phenylene radicals. At least about 85% of the D groups in formula II are ethylene groups (derived from ethylene glycol).

The short-chain ester units constitute about 25—85% by weight of the copolyester, preferably from 30—80% by weight, since within that range polymers having the most favourable physical properties are obtained.

Preferred block copolyesters for use in the compositions of this invention are those prepared from dimethyl terephthalate, ethylene glycol and poly(tetramethylene oxide) glycol having a number average molecular weight of about 600—2000 or ethylene oxide-capped poly(propylene oxide) glycol having a number average molecular weight of about 1500—2800 and an ethylene oxide content of 15—35% by weight. Optionally, up to 15 mole per cent of the dimethyl terephthalate in these polymers can be replaced by dimethyl phthalate or dimethyl isophthalate or up to 15 mole per cent of the ethylene glycol by another low molecular weight diol.

The block copolyesters described herein are made by a conventional ester interchange reaction which, preferably, takes place in the presence of an antioxidant. A preferred procedure involves heating the dimethyl ester of terephthalic acid and polyalkylene oxide glycol in the presence of a molar excess of ethylene glycol and a catalyst at about 150—260°C and a pressure of 0,05 to 0,5 MPa, while distilling off methanol formed by the ester interchange. The resulting low molecular weight prepolymer can be carried to a high molecular weight copolyetherester by distilling off the excess of the low-molecular weight diol. This final distillation is generally run at less than 670 Pa, preferably less than 250 Pa, and a temperature between 200° and 280°C for less than 2 hours, preferably for about 0,5 to 1,5 hours. In the ester interchange reactions use in generally made of a catalyst. Commonly employed catalyst systems are antimony trioxide and organic titanates such as tetrabutyl titanate used alone or in combination with magnesium acetate or calcium acetate. The catalyst is generally employed in an amount of 0,005 to 2,0% by weight of the reaction mixture.

Polycondensation of low molecular weight polymers can also be accomplished in the solid phase by heating finely divided polymer particles in vacuo or in a stream of an inert gas.

The nucleating agent (B) to be incorporated into the thermoplastic block copolyester resin compositions according to the invention may be an inert insoluble substance or a salt of an organic mono- or polycarboxylic acid. The inert insoluble substances are generally inorganic substances having a particle size not greater than 2 to 3 µm. They are generally employed in concentrations not higher than 1% by weight.

Examples of such solid nucleating agents include talc, calcium silicate and/or magnesium silicate, titanium dioxide, magnesium oxide, calcium carbonate, borium nitride, sodium fluoride and calcium fluoride. Preference, however, is given to salts of mono- or polycarboxylic acids; very favourable results are generally obtained when the nucleating agent in a salt of an alkali metal or an alkali earth metal.

Favourable results are obtained by using a nucleating agent which is a sodium salt or potassium salt of an organic acid having 7 to 30 carbon atoms or a sodium salt of potassium salt or an organic polymer having carboxyl groups.

Examples of these acids (which are fatty acids) are stearic acids, pelargonic acid and behenic acid. As further examples may be mentioned the sodium salts or potassium salts of carboxyl groups-containing organic polymers, such as copolymers of alkenes and acrylic of methacrylic acids, or copolymers or aromatic alkenes and maleic anhydride. Preferred are the sodium salt or potassium salt of ethylene/methacrylic acid copolymers (and also wholly or partially neutralized salts, e.g., the approximately 30%-neutralized salts), the sodium salt of styrene maleic anhydride copolymers (and also wholly or partially neutralized salts, e.g., the approximately 30%-neutralized salts) and sodium versatate. The alkene or the aromatic alkene is generally contained in the abovementioned copolymers in an amount of 50—98% by weight, preferably 80—98% by weight, calculated on the copolymer. Preference is given to the sodium salt of the copolymer of ethylene and methacrylic acid. The copolymers may be prepared by the known method of high-pressure polymerization. As further examples of nucleating agents that may be incorporated into the resin compositions of the present invention may be mentioned sodium formiate, sodium acetate, calcium acetate, barium acetate, sodium glycolate, sodium tartrate, sodium stearate, sodium montanate, sodium salicylate, sodium benzoate which may optionally be substituted with a nitro group, halogen atom,

hydroxy group, phenyl group or oxyphenyl group, the sodium salt of a mixture of branched monocarboxylic acids obtained by reaction of acetic anhydride with an α-olefin having 20—50 carbon atoms in the presence of Mn(III) acetate, the disodium salt of dimeric oleic acid, the sodium salt of $C_{10}$—$C_{50}$ alkyl substituted succinic acid and/or the sodium salts of polyhydric phenols.

The nucleating action of the afore-mentioned nucleating agents may be further enhanced by adding the diglycidyl ether or bisphenol A and/or the oligomeric reaction product of epichlorohydrin and bisphenol A.

The amount of nucleating agent to be added in order to obtain acceptable results very much depends on the type of nucleant applied.

Generally, amounts less than 0,01% by weight will not lead to any significant effect. Amounts exceeding 10% will generally have a detrimental effect on the physical properties of the polymer.

As a rule, favourable results are obtained using an amount in the range of from 0,05 to 5% by weight, calculated on the weight of the block copolyester.

It should be noted that some fillers also act as nucleants. It will be obvious that block copolyester resin compositions which contain such a filler in a concentration exceeding 10% by weight of the resin composition also form part of the present invention. As an example of such a nucleating agent may be mentioned talc, more particularly microtalc.

The accelerator (C) is selected from the group of the following compounds:

a) organic esters obtained from an aromatic carboxylic acid having 7—11 carbon atoms and at least 1 carboxyl group per aromatic core and an alcohol of the formula $(HOCH_2\text{-})_xR'$ wherein x represents 1, 2 or 3 and R' a hydrocarbon radical having 2—15 carbon atoms, preferably 2—10 carbon atoms or an alcohol of the formula $(HO\text{—}(R''O\text{—})_yR'''$ wherein y represents a whole number from 1—15, preferably 1—8, R'' a hydrocarbon radical having 2—15 carbon atoms, preferably 2—8 carbon atoms, and R''' a hydrogen atom or a hydrocarbon radical having 2—20 carbon atoms, preferably 2—12 carbon atoms,

b) organic ketones of the formula $R\overset{O}{\overset{\|}{C}}R$,

c) organic sulphones of the formula RSOOR,

d) organic sulphoxides of the formula $R_2SO$,

e) organic nitriles of the formula RCN,

f) organic amides of the formula

$$R\overset{O}{\overset{\|}{C}}NR'R \text{ or } R\overset{O}{\overset{\|}{S}}ONR'R,$$

g) organic (thio) ethers of formuls RXR, where X represents an oxygen atom or a sulphur atom, or

h) oligomers of the compounds mentioned under a through g;

where R in the formulae under b)—f) represents a hydrocarbon group having 1—25 carbon atoms; R' in the formula under f) represents a hydrogen atom or a hydrocarbon group having 1—25 carbon atoms and R in the formula under g) has the meaning of an aromatic group having 6 to 10 carbon atoms, R' represents a hydrocarbon group having 1 to 25 carbon atoms and n is a whole number from 2 to 15.

Preferred organic esters of the component C are the esters in which the aromatic carboxylic acids are hydrocarbon acids having 1—3 carboxyl groups and the alcohols are aliphatic. In other words, the R groups in the alcohols are alkyl groups or alkylene groups, depending on the particular R group. Preferably also when the carboxylic acids contain two or more carboxyl groups the carboxyl groups should all be reacted to form ester (COO) linkages, that is there will be no free carboxyl groups present in the ester. Likewise it is preferred that all hydroxyl groups of the alcohols should be reacted to form ester (COO) linkages, that is there will be no free hydroxyl groups present in the ester.

Preferred is a group of esters in which the acid is benzoic acid and the alcohol is of the formula $(HOCH_2)_2$—R', wherein R' represents an alkylene group having 4—6 carbon atoms (preferably neopentyl glycol) or an alcohol of the formula $HO(R''O\text{—})_yH$, wherein R'' represents an ethylene group or a propylene group and y is 2 or 3.

Ketones, sulphones, sulphoxides, nitriles, amides and ethers which are to be preferred are those in which the R groups in the above formulae of these compounds are aryl groups having 6—10 carbon atoms or alkyl groups having 1—10 carbon atoms.

Examples of suitable compounds selected from the above-mentioned group of compounds include the dibenzoate of neopentyl glycol, the dibenzoate of triethylene glycol, the dibenzoate of diethylene glycol, the dibenzoate of dipropylene glycol, tris-2-ethylhexyl trimellitate, phenyl benzoate, trimethylol ethane tribenzoate, dioctylphthalate, diisodecylphthalate, benzophenone, 4-fluorobenzophenone, diphenyl sulphone, N-ethyl-o,p-toluene sulphonamide, tolyl sulphoxide, lauryl nitrile, erucyl nitrile, diphenyl ether, and oligomers thereof, such as poly-m-phenylene oxide (containing about 9 phenylene oxide groups).

In order that a composition may be obtained whose $\Delta H_H$ is at least 15% smaller than that of an identical composition into which no accelerator is incorporated, the amount of accelerator to be incorporated into the block copolyester resin compositions according to the invention will be in the range of 0,5 to 15% by

weight, calculated on the resin composition. Satisfactory results will generally be obtained when the accelerator is used in an amount of 1 to 5% by weight. The optimum amount of accelerator to be incorporated very much depends on the type of accelerator and the composition of the block copolyester.

As in the case of the nucleating agents, particular substances that are added to the resin compositions for quite a different purpose also may act as accelerator. In this connection mention is made of the halogenated products of the afore-mentioned accelerators, which combine a crystallization accelerating function with a fire retarding function. Also the carnauba wax used as release agent appears to have an accelerating effect on the hardening of the present copolyesters. As the amount thereof that may be used is generally not higher than 1% by weight, the hardening rate of the resin composition may be further increased by additional incorporation into it of one or more of the afore-mentioned accelerators.

As the components B and C incorporated into the compositions of the invention have an accelerating effect on the hardening rate of the block copolyesters, products displaying a high gloss are obtained at a mould temperature below 90°C.

In addition, the resin compositions according to the invention may be modified by the incorporation therein of various conventional inorganic fillers, such as carbon black, silica gel, aluminium oxide, clay and glass fibres.

Into the resin compositions according to the invention there may also be incorporated colourants, mould release agents, antioxidants, U.V.-stabilizers, fire retarding additives, etc.

The resin compositions according to the invention are prepared by mixing the various components in suitable equipment. For example, in a suitable mixer, e.g. a tumbler, a block copolyester while dry is mixed with the components B and C, optionally in the presence of a filler, after which the mixture is extruded from the melt.

The invention will be further described in the following examples.

## Example I

A copolyester was prepared containing 58% by weight of polyethylene terephthalate (PETP) units and 42% by weight of polytetramethylene oxide glycol terephthalate (PTHFTP) units. The molecular weight of the polytetramethylene oxide glycol was 1000. Granules of this polymer, which had a relative viscosity of 2,4 g (measured in a 1% by weight solution of the polymer in o-chlorophenol at 25°C) were sprayed with an aqueous solution of sodium benzoate in such an amount as corresponds to 0,25% by weight of sodium benzoate, calculated on the weight of the copolyetherester.

After drying separate batches of these granules were provided with 0,3% by weight of carnauba wax, 0,3% by weight of carnauba wax and 3% by weight of diphenyl oxide, 0,3% by weight of carnauba wax and 2,5% by weight of neopentyl glycol dibenzoate (NPGD) or 2% by weight of calcium montanate, respectively, at a temperature of 110°C.

Another batch contained 0.5% by weight of microtalc (charged into the autoclave during the preparation of the polymer) as nucleating agent, 0,3% by weight of carnauba wax and 3% by weight of diphenyl oxide (DFE). The granules thus treated were injection moulded into ISO-I impact test bars in an Arburg-Allrounder injection moulding machine (cylinder temperature 225°C, a cycle of 0,3—15—15—3 seconds and a follow-up pressure of 5000 kPa) at a mould temperature of 50°C. Immediately upon their release from the mould the injection moulded products were solidified by quenching in liquid nitrogen. Subsequently, a temperature curve was registered with the aid of a Differential Scanning Calorimeter. The samples were subjected to programmed heating from −30°C to a temperature of 110°C. In this way the heat of cold crystallization $\Delta H_H$ was determined.

The results are given in the table below, in which NaB stands for sodium benzoate, CW for carnauba wax, DFE for diphenyl oxide, NPGD for neopentyl glycol dibenzoate, CaM for calcium montanate, PETP for polyethylene terephthalate and PTHFTP for polytetrahydrofuran terephthalate.

TABLE I

| additives (in wt.%) to copolyetherester of 58 wt.% PETP and 42 wt.% PTHFTP | percentage decrease of $\Delta H_H$ upon adding an accelerator |
|---|---|
| none | — |
| 0,25 NaB (blank) | 0 |
| 0,25 NaB + 0,3 CW | 44,4 |
| 0,25 NaB + 0,3 CW + 3 DFE | 88,9 |
| 0,25 NaB + 0,3 CW + 2,5 NPGD | 66.7 |
| 0,25 NaB + 2 CaM | −238,9 |

From the above table it is clear that in contrast to calcium montanate, which appears to have a negative effect on the rate of crystallization, also carnauba wax acts both as release agent and as accelerator.

Example II

Use being made of polytetramethylene glycol having a molecular weight of 1000, a copolyetherester was prepared containing 72,5% by weight of polyethylene terephthalate units and 27.5% by weight of polytetramethylene oxide glycol terephthalate units.

This polymer was chopped into granules that were sprayed with aqueous solutions or dispersions of nucleating agents given in this table, calculated on the weight of the copolyetherester.

After drying several separate batches of these granules were provided with 3% by weight of neopentyl glycol dibenzoate (NPGD) at 110°C. The granules thus treated were injected moulded into UL—94 bars 1,6 mm thick with the aid of an Arbury Allrounder injection moulding machine at a mould temperature of 50°C.

The injection moulding conditions are given in the table below.

TABLE 2

Injection moulding data

| | |
|---|---|
| Barrel temperature (°C) | 240—275* |
| Nozzle temperature (°C) | 240—270* |
| Mould temperature (°C) | 50 |
| Injection time (sec) | 0,2 |
| Afterpressure time (sec) | 11,8 |
| Cooling time (sec) | 18,0 |
| Release time (sec) | 2,0 |
| Screw revolution (rpm) | 200 |
| Afterpressure (kPa) | 5000 |

* Depending on resin composition

Immediately after release from the mould the test bars were quenched by means of liquid nitrogen and subsequently stored in a refrigerator at −30°C.

The crystallization behaviour was determined by thermal analysis with a DSC in a similar way as indicated in Example I.

The results are given in the table below.

The relative viscosities of the mouldings were measured in 1% by weight solutions of the resin in orthochlorophenol at 25°C.

TABLE 3

| copolyetherester of 72,5 wt.% PETP and 27,5 wt.% of PTHFTP with as additive in wt.% | $\eta_{rel}$ | percentage decrease of $\Delta H_H$ by addition of accelerator |
|---|---|---|
| 0,15 NaB | 2,11 | 0 |
| 0,15 NaB + 3 NPGD | 1,98 | 39,6 |
| 0,24 di Na tartrate dihydrate | 2,10 | 0 |
| 0,24 di Na tartrate dihydrate + 3 NPGD | 2,01 | 55,0 |
| 0,17 Na salicilate | 2,10 | 0 |
| 0,17 Na salicilate + 3 NPGD | 2,01 | 31,4 |

The above table clearly shows the positive effect on the rate of crystallization of adding 3% by weight of neopentyl glycol dibenzoate in combination with several nucleating agents.

Example III

Use being made of polytetramethylene oxide glycol having a molecular weight of 1000 a copolyetherester was prepared containing 70,6% by weight of polyethylene terephthalate units and 29,4% by weight of polytetramethylene oxide glycol terephthalate units. The polymer obtained was chopped into granules that were sprayed with an aqueous sodium benzoate solution in an amount such as corresponds to the amount of nucleating agent mentioned in Table 4, calculated on the weight of the copolyetherester. After the granules had been dried several separate batches of them were provided with 3% by weight of accelerator at 110°C.

The granules thus treated were injection moulded into UL—94 bars 1,6 mm thick on an Arbury Allround injection moulding machine, as indicated in Example II. The decrease in $\Delta H_H$ caused by the accelerator was determined in the way given in Example II.

TABLE 4

| copolyetherester of 70,6 wt.% PETP and 29,4 wt.% of PTHFTP, cont. 0,15 wt.% NaB and 3 wt.% of the accelerator mentioned below | $\eta_{rel}$ | percentage decrease in $\Delta H_H$ due to the accelerator added |
|---|---|---|
| control (no accelerator added) | 2,04 | 0 |
| NPGD | 1,94 | 51,5 |
| benzloctyl adipate | 1,98 | 37,8 |
| diisooctyl phthalate | 1,99 | 26,9 |
| diethyleneglycoldibenzoate | 1,88 | 70,3 |
| diphenyl oxide | 1,99 | 42,8 |
| poly-m-phenylene oxide (n = ca. 9) | 1,96 | 35,6 |
| diphenylamine | 1,85 | 61,5 |
| triphenylamine | 1,91 | 18,4 |
| benzophenone | 1,97 | 56,6 |
| diphenylsulphone | 1,97 | 19,7 |
| N-ethyl-o,p-toluene sulphonamide | 1,96 | 39,2 |

Table 4 clearly shows the positive effect on the rate of crystallization upon addition of various accelerators in combination with sodium benzoate.

Example IV

Use being made of polytetramethylene oxide glycol having a molecular weight of 1000 copolyetheresters were prepared having a composition as indicated in Table 5. The polymer obtained was chopped into granules which were provided with a nucleating agent and an accelerator in amounts given in the table. Injection moulding and $\Delta H_H$ determination were carried out in the same way as mentioned in Example II.

TABLE 5

| PETP/PTHFTP ratio of co-polyetherester | nucleating agent (in wt.%) | accelerator (in wt.%) | $\eta_{rel}$ | percentage decrease of $\Delta H_H$ |
|---|---|---|---|---|
| 66/34* | 0,15 NaB | control (no accelerator) | 1,81 | 0 |
| | 0,15 NaB | 3% NPGD | 1,72 | 35,4 |
| 60,4/39,6 | 0,5 sodium montanate | control (no accelerator) | 2,09 | 0 |
| | 0,5 sodium montanate | 3% NPGD | 2,04 | 76,1 |

* hard block containing 5 mole% 2-methyl pentane-2,4-diol (calculated on terephthalic acid)

The above example shows that both copolyesters whose hard segments contained a codiol and those that contained a relatively high proportion of soft segments are favourably affected as regards rate of crystallization as a result of the addition of NPGD as accelerator.

**Claims**

1. A thermoplastic block copolyester resin composition comprising (A) a block copolyester which substantially consists of repeating intralinear long-chain ester units and short-chain ester units joined through ester linkages, which long-chain ester units correspond to the formula

$$-OGO-\overset{O}{\overset{\|}{C}}-R-\overset{O}{\overset{\|}{C}}- \qquad (I)$$

and which short-chain ester units correspond to the formula

$$-ODO-\overset{O}{\overset{\|}{C}}-R-\overset{O}{\overset{\|}{C}}- \qquad (II)$$

where G is a divalent radical remaining after the removal of terminal hydroxyl groups from at least one long-chain glycol having a melting point not higher than 55°C and a number average molecular weight of from 400—4000, R is a divalent radical remaining after removal of carboxyl groups from at least one dicarboxylic acid having a molecular weight of less than 300, and D is a divalent radical remaining after removal of hydroxyl groups from at least one aliphatic diol having a molecular weight of less than 250, with the proviso that the short-chain ester units contain at least 85 mole per cent of ethylene terephthalate units, said short-chain ester units being present in an amount of 25—85% by weight, based on the copolyester; and (B) a nucleating agent in an amount of 0,01 to 10% by weight, based on the copolyester, characterized in that there is also incorporated from 0,5 to 15% by weight, calculated on the resin composition, of an accelerator (C) selected from the group of:

a) organic esters obtained from an aromatic carboxylic acid having 7—11 carbon atoms and at least 1 carboxyl group per aromatic core and an alcohol of the formula $(HOCH_2-)_xR'$ wherein x represents 1, 2 or 3 and R' a hydrocarbon radical having 2—15 carbon atoms, or an alcohol of the formula $(HO-(R''O-)_yR'''$ wherein y represents a whole number from 1—15, R'' a hydrocarbon radical having 2—15 carbon atoms, and R''' a hydrogen atom or a hydrocarbon radical having 2—20 carbon atoms,

b) organic ketones of the formula $R\overset{O}{\overset{\|}{C}}R$,

c) organic sulphones of the formula RSOOR,

d) organic sulphoxides of the formula $R_2SO$,

e) organic nitriles of the formula RCN,

f) organic amides of the formula

$$R\overset{O}{\overset{\|}{C}}NR'R \text{ or } R\overset{O}{\overset{\|}{S}}ONR'R,$$

g) organic (thio) ethers of formula RXR, where X represents an oxygen atom or a sulphur atom, or

h) oligomers of the compounds mentioned under a through g;

where R in the formulae under b)—f) represents a hydrocarbon group having 1—25 carbon atoms; R' in the formula under f) represents a hydrogen atom or a hydrocarbon group having 1—25 carbon atoms and R in the formula under g) has the meaning of an aromatic group having 6 to 10 carbon atoms, R' represents a hydrocarbon group having 1 to 25 carbon atoms and n is a whole number from 2 to 15, provided that the amount of the compound is sufficient to decrease the heat of cold crystallization $\Delta H_H$ per g resin by at least 15% below that of a blend of the components (A) and (B).

2. A resin composition according to claim 1, characterized in that the accelerator is used in an amount of 1 to 5% by weight, calculated on the resin composition.

3. A resin composition according to claim 1, characterized in that the nucleating agent is a salt of an alkali metal or an alkali earth metal.

4. A resin composition according to claim 1, characterized in that the nucleating agent is an alkali metal salt of an organic acid having not more than 30 carbon atoms.

5. A resin composition according to claim 1, characterized in that the nucleating agent is a sodium salt or potassium salt of an oragnic acid having 7 to 30 carbon atoms or a sodium salt or potassium salt of an organic polymer containing carboxyl groups.

6. A resin composition according to claim 1, characterized in that the nucleating agent used is sodium formiate, sodium acetate, calcium acetate, barium acetate, sodium glycolate, sodium tartrate, sodium stearate, sodium montanate, sodium salicylate, sodium benzoate, which may optionally be substituted with a nitrogroup, halogen atom, hydroxy group, phenyl group or oxyphenyl group, the sodium salt of a mixture of branched monocarboxylic acids obtained by reaction of acetic anhydride with an α-olefin having

20—50 carbon atoms in the presence of Mn(III) aetate, the disodium salt of dimeric oleic acid, the sodium salt of $C_{10}$—$C_{50}$ alkyl substituted succinic acid and/or sodium salts of polyhydric phenols.

7. A resin composition according to claim 1, characterized in that the accelerator is an organic ester obtained from a 7—11 carbon atoms-containing aromatic hydrocarbon carboxylic acid having 1—3 carboxyl groups per aromatic core and an alcohol of the formula $(HOCH_2—)_xR'$, wherein x represents 1, 2 or 3 and R' represents and alkyl group containing 2—10 carbon atoms where x = 1 and R' represents an alkylene group containing 2—10 carbon atoms when x is 2 or 3, or an alcohol of the formula $(HO—(R''—O—)_yR'''$ wherein y is a whole number from 1—8, R'' represents an alkylene group having 2—8 carbon atoms and R''' a hydrogen atom.

8. A resin composition according to claim 1, characterized in that the accelerator is an organic ester obtained from benzoic acid and an alcohol of the formula $(HOCH_2)_2—R'$, wherein R' is an alkyene group having 4—6 carbon atoms or an alcohol of the formula $HO(R''''O—)_yH$, wherein R'' represents an ethylene group or propylene group and y is 2 or 3.

**Patentansprüche**

1. Eine thermoplastische Blockcopolyesterharzzusammensetzung umfassend

(A) einen Blockcopolyester der im wesentlichen aus sich wiederholenden intralinearen langkettigen Estereinheiten und kurzkettigen Estereinheiten besteht, die durch Esterbindungen verbunden sind, wobei die langkettigen Estereinheiten der Formel

$$—OGO—\overset{O}{\overset{\|}{C}}—R—\overset{O}{\overset{\|}{C}}— \qquad (I)$$

entsprechen und die kurzkettigen Estereinheiten der Formel

$$—ODO—\overset{O}{\overset{\|}{C}}—R—\overset{O}{\overset{\|}{C}}— \qquad (II)$$

entsprechen, in denen

G ein zweiwertiger Rest ist, der nach dem Entfernen der endständigen Hydroxylgruppen von mindestens einem langkettigen Glykol mit einem Schmelzpunkt nicht höher als 55°C und einer durchschnittlichen Molekulargewichtszahl von 400—4000 verbleibt,

R ein zweiwertiger Rest ist, der nach dem Entfernen der Carboxylgruppen aus mindestens einer Dicarbonsäure mit einem Molekulargewicht von weniger als 300 verbleibt und

D ein zweiwertiger Rest ist, der nach dem Entfernen der Hydroxylgruppen aus mindestens einem aliphatischen Diol mit einem Molekulargewicht von weniger als 250 verbleibt,

mit der Maßgabe, daß die kurzkettigen Estereinheiten mindestens 85 Molprozent Ethylen-Terephthalat-Einheiten enthalten, wobei die kurzkettigen Estereinheiten in einer Menge von 25—85 Gewichtsprozent, bezogen auf den Copolyester, vorliegen, und

(B) ein Nukleierungsmittel in einer Menge von 0,01 bis 10 Gewichtsprozent, bezogen auf den Copolyester, dadurch gekennzeichnet, daß zusätzlich 0,5 bis 15 Gewichtsprozent, bezogen auf die Harzzusammensetzung, eines Beschleunigers (C) eingearbeitet ist, der ausgewählt ist aus der Gruppe

(a) organischer Ester, die aus aromatischen Carbonsäuren mit 7 bis 11 Kohlenstoffatomen und mindestens 1 Carboxylgruppe je aromatischen Kern und einem Alkohol der Formel$(HOCH_2—)_xR'$, in der x 1, 2 oder 3 und R' einen Kohlenwasserstoffrest mit 2 bis 15 Kohlenstoffatomen darstellen, oder einem Alkohol der Formel $(HO—(R''O—)_yR'''$, in der y eine ganze Zahl von 1 bis 15, R'' einen Kohlenwasserstoffrest mit 2 bis 15 Kohlenstoffatomen und R''' ein Wasserstoffatom oder einen Kohlenwasserstoffrest mit 2 bis 20 Kohlenstoffatomen darstellen erhalten worden sind,

(b) organischer Ketone der Formel $R—\overset{O}{\overset{\|}{C}}—R$,

(c) organischer Sulfone der Formel RSOOR,

(d) organischer Sulfoxide der Formel $R_2SO$,

(e) organischer Nitrile der Formel RCN,

(f) organischer Amide der Formeln

$$R\overset{O}{\overset{\|}{C}}NR'R \text{ oder } R\overset{O}{\overset{\|}{S}}ONR'R,$$

(g) organischer (Thio) äther der Formel RXR, in der X ein Sauerstoffatom oder Schwefelatom darstellt, oder

(h) Oligomere der unter (a) bis (g) genannten Verbindungen, wobei R in der Formeln unter (b) bis (f) einen Kohlenwasserstoffrest mit 1 bis 25 Kohlenstoffatomen darstellt, R' in der Formel unter (f) ein Wasserstoffatom oder einen kohlenwasserstoffrest mit 1 bis 25 Kohlenstoffatomen darstellt und R in der Formel unter (g) die Bedeutung einer aromatischen Gruppe mit 6 bis 10 Kohlenstoffatomen hat, R' einen Kohlenwasserstoffrest mit 1 bis 25 Kohlenstoffatomen darstellt und n eine ganze Zahl von 2 bis 15 ist, mit der Maßgabe, daß die Menge der Verbindung ausreichend ist, die Wärme der Kaltkristallisation $\Delta H_H$ je g Harz um mindestens 15 Prozent unter jene einer Mischung der Komponenten (A) und (B) herabzusetzen.

2. Eine Harzzusammensetzung nach Anspruch 1, dadurch gekennzeichnet, daß der Beschleuniger in einer Menge von 1 bis 5 Gewichtsprozent, berechnet auf die Harzzusammensetzung, verwendet wird.

3. Eine Harzzusammensetzung nach Anspruch 1, dadurch gekennzeichnet, daß das Nukleierungsmittel ein Salz eines Alkalimetalls oder Erdalkalimetalls ist.

4. Eine Harzzusammensetzung nach Anspruch 1, dadurch gekennzeichnet, daß das Nukleierungsmittel ein Alkalimetallsalz einer organischen Säure mit nicht mehr als 30 Kohlenstoffatomen ist.

5. Eine Harzzusammensetzung nach Anspruch 1, dadurch gekennzeichnet, daß das Nukleierungsmittel ein Natriumsalz oder Kaliumsalz einer organischen Säure mit 7 bis 30 Kohlenstoffatomen oder ein Natriumsalz oder Kaliumsalz eines Carboxylgruppen enthaltenden organischen Polymers ist.

6. Eine Harzzusammensetzung nach Anspruch 1, dadurch gekennzeichnet, daß das verwendete Nukleierungsmittel Natriumformiat Natriumacetat, Calciumacetat, Bariumacetat, Natriumglycolat, Natriumtartrat, Natriumstearat, Natriummontanat, Natriumsalicylat, Natriumbenzoat, das gegebenenfalls mit einer Nitrogruppe, Halogenatom, Hydroxylgruppe, Phenylgruppe oder Oxyphenylgruppe substituiert sein kann, das Natriumsalz eines Gemisches verzweigter Monocarbonsäuren, die durch Umsetzung von Essigsäureanhydrid mit einem α-Olefin mit 20 bis 50 Kohlenstoffatomen in der Gegenwart von Mn(III)-acetat erhalten worden sind, das Dinatriumsalz einer dimeren Ölsäure, das Natriumsalz einer $C_{10-50}$-alkylsubstituierten Bernsteinsäure, und/oder die Natriumsalze von mehrwertigen Phenolen ist.

7. Eine Harzzusammensetzung nach Anspruch 1, dadurch gekennzeichnet, daß der Beschleuniger ein organischer Ester ist, der aus einer 7—11 Kohlenstoffatome enthaltenden aromatischen Kohlenwasserstoffcarbonsäure mit 1 bis 3 Carboxylgruppen je aromatischem Kern und einem Alkohol der Formel $(HOCH_2—)_xR'$, in der x 1, 2 oder 3 darstellt und R' eine Alkylgruppe mit 2 bis 10 Kohlenstoffatomen darstellt, wenn x = 1 ist, und R' eine Alkylengruppe mit 2 bis 10 Kohlenstoffatomen darstellt, wenn x 2 oder 3 ist, oder einem Alkohol der Formel $(HO—(R''—O—)_yR'''$ erhalten worden ist, in der y eine ganze Zahl von 1 bis 8 ist, R'' eine Alkylengruppe mit 2 bis 8 Kohlenstoffatomen darstellt und R''' ein Wasserstoffatom ist.

8. Eine Harzzusammensetzung nach Anspruch 1, dadurch gekennzeichnet, daß der Beschleuniger ein organischer Ester ist, der aus Benzoesäure und einem Alkohol der Formel $(HOCH_2)_2—R'$, in der R' eine Alkylengruppe mit 4 bis 6 Kohlenstoffatomen ist, oder einem Alkohol der Formel $HO(R''O—)_yH$ erhalten worden ist, in der R'' eine Ethylengruppe oder Propylengruppe darstellt und y 2 oder 3 ist.

**Revendications**

1. Composition de résine copolyester block thermoplastique comprenant (A) un copolyester bloc qui est constitué sensiblement de la répétition intralinéaire d'unités ester à longue chaîne et d'unités esters à chaînes courtes reliées par des liaisons ester, dont les unités ester à longue chaîne correspondent à la formule:

$$—OGO—\overset{\overset{O}{\|}}{C}—R—\overset{\overset{O}{\|}}{C}— \quad (I)$$

et dont les unités esters à chaîne courte correspondent à la formule:

$$—ODO—\overset{\overset{O}{\|}}{C}—R—\overset{\overset{O}{\|}}{C}— \quad (II)$$

dans laquelle:

G est un radical divalent restant après l'élimination de groupes terminaux hydroxyles d'au moins un glycol à longue chaîne ayant un point de fusion non supérieur à 55°C et un poids moléculaire moyen en nombre de 400 à 4000,

R est un radical divalent restant après l'élimination de groupes carboxyles d'au moins un acide dicarboxylique ayant un poids moléculaire inférieur à 300 et

D est un radical divalent restant après l'élimination de groupes hydroxyles d'au moins un diol aliphatique ayant un poids moléculaire inférieur à 250, avec la condition que les unités ester à chaîne courte contiennent au moins 85% molaires d'unités éthylène-téréphtalate, ces unités ester à chaîne courte étant présentes à raison de 25 à 85% en poids, rapporté au copolyester; et (B) un agent nucléant à raison de 0,01 à 10% en poids rapporté au copolyester caractérisé en ce qu'il se trouve incorporé de 0,5 à 15% en poids, calculé par rapport à la composition de résine, d'un acclélérateur (C) choisi parmi le groupe des:

a) esters organiques obtenus à partir d'un acide carboxylique aromatique ayant de 7 à 11 atomes de carbon et au moins un group carboxyle par noyau aromatique et un alcool de formule $(HOCH_2—)_xR'$ dans laquelle x représente 1, 2 ou 3 et R' un radical d'hydrocarbure ayant 2 à 15 atomes de carbone, ou un alcool de formule $(HO—(R''O—)_yR'''$ dans laquelle y représente un nombre entier compris entre 1 et 15, R'' est un radical hydrocarbure ayant 2 à 15 atomes de carbone, et R''' un atome d'hydrogène ou un radical hydocarbure ayant 2 à 20 atomes de carbone,

b) cètones organiques de formule $R\overset{\overset{O}{\|}}{C}R$,

c) sulfones organiques de formule RSOOR

d) sulfoxydes organiques de formule $R_2SO$

e) nitriles organiques de formule RCN

f) amides organiques de formule

$$R\overset{\overset{O}{\|}}{C}NR'R \text{ ou } R\overset{\overset{O}{\|}}{S}ONR'R,$$

g) (thio)éthers organiques de formule RXR dans laquelle X représente un atome d'oxygène ou un atome de soufre, ou

h) oligomères des composés mentionnés de a) à g); dans lesquels R dans les formules de b) à f) représente un groupe d'hydrocarbure ayant de 1 à 25 atomes de carbone; R' dans la formule f) représente un atome d'hydrogène ou un groupe hydrocarbure ayant de 1 à 25 atomes de carbone et R dans la formule g) a la signification d'un groupe aromatique ayant de 6 à 10 atomes de carbone, R' représente un groupe d'hydrocarbure ayant de 1 à 25 atomes de carbone et n est un nombre entier de 2 à 15 pourvu que la quantité de composé soit suffisante pour diminuer l'enthalpie de cristallisation $\Delta H_H$ par g de résine d'au moins 15% en-dessous de celle d'un mélange de composants (A) et (B).

2. Composition de résine selon la revendication 1, caractérisée en ce qu'on utilise accélérateur à raison de 1 à 5% en poids, calculé par rapport à la composition de résine.

3. Composition de résine selon la revendication 1, caractérisée en ce que l'agent nucléant est un sel d'un métal alcalin ou d'un métal alcalino-terreux.

4. Composition de résine selon la revendication 1, caractérisée en ce que l'agent nucléant est un sel de métal alcalin d'un acide organique n'ayant pas plus de 30 atomes de carbone.

5. Composition de résine selon la revendication 1, caractérisée en ce que l'agent nucléant est un sel de sodium ou un sel de potassium d'un acide organique ayant de 7 à 30 atomes de carbone ou un sel de sodium ou un sel de potassium d'un polymère organique contenant des groupes carboxyles.

6. Composition de résine selon la revendication 1, caractérisée en ce que l'agent nucléant utilisé est le formiate de sodium, l'acétate de sodium, l'acétate de calcium, l'acétate de baryum, le glycolate de sodium, le tartrate de sodium, le stéarate de sodium, le montanate de sodium, le salicylate de sodium le benzoate de sodium qui peut en option être substitué par un groupe nitro, un atome d'halogène, un groupe hydroxy, un groupe phényle ou groupe oxyphényle, le sel de sodium d'un mélange d'acides monocarboxyliques ramifiés obtenu par réaction d'anhydride acétique avec une alpha-oléfine ayant de 20 à 50 atomes de carbone en présence d'acétate de Mn(III), le sel disodique du dimère de l'acide oléique, le sel de sodium de l'acide succinique substitué par un radical alkyle en $C_{10}$ à $C_{50}$ et/ou sels de sodium des phénols polyhydriques.

7. Composition de résine selon la revendication 1, caractérisée en ce que l'accélérateur est un ester organique obtenu à partir d'un acide carboxylique hydrocarboné aromatique contenant 7 à 11 atomes de carbon ayant 1 à 3 groupes carboxyles par noyau aromatique et d'un alcool de formule $(HOCH_2—)_xR'$ dans laquelle x représente 1, 2 ou 3 et R' représente un groupe alkyle contenant 2 à 10 atomes de carbone quand x = 1 et R' représente un groupe alkylène contenant 2 à 10 atomes de carbone quand x est 2 ou 3, ou un alcool de formule $(HO—(R''—O—)_yR'''$ dans laquelle y est un nombre entier de 1 à 8, R'' représente un groupe alkylène ayant de 2 à 8 atomes de carbone et R''' un atome d'hydrogène.

8. Composition de résine selon la revendication 1, caractérisée en ce que l'accélérateur est un ester organique obtenu à partir de l'acide benzoïque et d'un alcool de formule $(HOCH_2)_2—R'$, dans lequel R' est un groupe alkylène ayant 4 à 6 atomes de carbone, ou un alcool de formule $HO(R''O—)_yH$, dans laquelle R'' représente un groupe éthylène ou un groupe propylène et y est 2 ou 3.